# EUROPÄISCHE PATENTSCHRIFT

(11) **EP 0 614 017 B1**
(45) Veröffentlichungstag und Bekanntmachung des Hinweises auf die Patenterteilung: **20.08.1997**
(21) Anmeldenummer: 94102926.6
(22) Anmeldetag: 25.02.1994
(51) Int. Cl.: F16B 5/06

(54) **Flächenartige Aluminiumstrangpressprofile**
Planar aluminium profile extrusions
Profilés plans en aluminium extrudé

(30) Priorität: 01.03.1993 DE 4306250
(43) Veröffentlichungstag der Anmeldung: 07.09.1994
(73) Patentinhaber: WERNAL D. PILLATH GmbH, 59457 Werl (DE)
(72) Erfinder: Stössel, Rolf, Dipl.-Ing., D-59425 Unna (DE)
(74) Vertreter: Schirmer, Siegfried, Dipl.-Ing.

(56) Entgegenhaltungen:
- EP-A- 0 508 083
- DE-A- 4 116 080
- DE-U- 7 328 994
- DE-U- 9 110 175
- GB-A- 1 496 489

## Beschreibung

Die Erfindung betrifft flächenartige Aluminiumstrangpreßprofile, verbindbar zu einer Einheit, insbesondere zu einer begehbaren Fläche, wobei die Aluminiumstrangpreßprofile an ihren Längsseiten mit korrespondierenden Profilierungen versehen sind, nach dem Oberbegriff des Hauptanspruchs.

Bekannt sind lösbare und unlösbare Verbindungen von flächenartigen Aluminiumstrangpreßprofilen. Die lösbaren Verbindungen haben im allgemeinen den Nachteil, daß bei einer Belastung der hergestellten Fläche eine geringe Bewegung der Aluminiumstrangpreßprofile zueinander eintritt, wodurch störende Geräusche auftreten. Diese störenden Geräusche werden vermieden, wenn die einzelnen Aluminiumstrangpreßprofile starr miteinander verbunden sind. Diese starren Verbindungen sind jedoch nicht oder nur mit relativ großem Aufwand lösbar, z.B. bei Schraubverbindungen.

Aus der DE-A 41 16 080 ist eine lösbare Schnappverbindungsvorrichtung für zwei Bauelemente bekannt, die korrespondierende Profilierungen aufweisen. Diese korrespondierenden Profilierungen werden durch an den Stirnflächen der zu verbindenden Seiten der Bauelemente parallelverlaufende Schenkel gebildet, wobei diese beiden Schenkel durch einen Schnappverschluß miteinander verbunden sind. Zur Sicherung des Schnappverschlusses dient eine durch zwei planaufliegende Schenkel führbare Schraube.

Abgesehen davon, daß durch die bekannte Verbindung keine durchgehende ebene Trittfläche herstellbar ist, ist der vorgesehene Schnappverschluß nur mit erheblichem Aufwand zu lösen, wobei durch den Schnappverschluß die vorgesehene Lage der benachbarten Bauelemente von vornherein festgelegt ist.

Der Erfindung liegt die Aufgabe zugrunde, eine Verbindung der aufgezeigten Gattung so auszubilden, daß sich die einzelnen Profile bei einer Belastung nicht relativ zueinander bewegen können und damit das Auftreten von störenden Geräuschen vermieden ist unter Beibehaltung einer jederzeitigen schnellen Lösbarkeit der Verbindung, wobei nach dem Verlegen benachbarter Bauelemente unter Verzicht auf einen Schnappverschluß durch das Anziehen der Schraube die beiden Bauelemente zueinandergezogen und festgelegt werden.

Diese Aufgabe wird erfindungsgemäß dadurch gelöst, daß sich die Auflauffläche am freien Ende des auskragenden Stegs befindet und dadurch das den auskragenden Steg aufweisende Aluminiumstrangpreßprofil zum benachbarten Profil heranziehbar ist. Die Auflauffläche kann durch eine konkav verlaufende Wölbung oder durch eine Schräge gebildet sein. Vorteilhafterweise verläuft die Abwinklung unter einem Winkel kleiner als 90° zum auskragenden Steg. Die Abwinklung kann beidseitig des auskragenden Stegs verlaufen, wobei das der Auflauffläche gegenüberliegende Ende der Abwinklung zweckmäßigerweise mit einer Profilierung versehen ist, der eine äquivalente Profilierung in der Aufnahmenut zugeordnet ist. Das der Auflagefläche gegenüberliegende Ende der Abwinklung ist vorteilhafterweise mit einer Verstärkung versehen.

Zur Erleichterung des Abbiegens oder Abkantens kann der auskragende Steg nahe seiner Anschlußstelle eine Sollbiegelinie aufweisen, wobei die Möglichkeit besteht, den auskragenden Steg annähernd um 90° abzukanten, so daß er innerhalb der längsseitigen Begrenzung des Profils liegt.

Zweckmäßige Ausgestaltungen der Erfindung sind in den weiteren Unteransprüchen aufgezeigt.

Durch die erfindungsgemäße Ausbildung wird ein völlig dichtes Anliegen der einzelnen Aluminiumstrangpreßprofile erreicht bei gleichzeitiger Arretierung dieses dichten Anliegens, so daß bei Belastungen keine Bewegungen der Profile zueinander eintreten können und damit störende Reibgeräusche vermieden werden. Außerdem ist ein jederzeit leichtes Lösen der Aluminiumstrangpreßprofile voneinander möglich.

Ausführungsbeispiele der Erfindung sind in der Zeichnung dargestellt und werden nachfolgend näher beschrieben. Es zeigen:
- Fig. 1: eine Ansicht einer Stirnseite von zwei miteinander verbundenen Aluminiumstrangpreßprofilen und
- Fig. 2: wie Fig. 1, jedoch mit veränderter Profilgebung der Längsseiten der Aluminiumstrangpreßprofile.

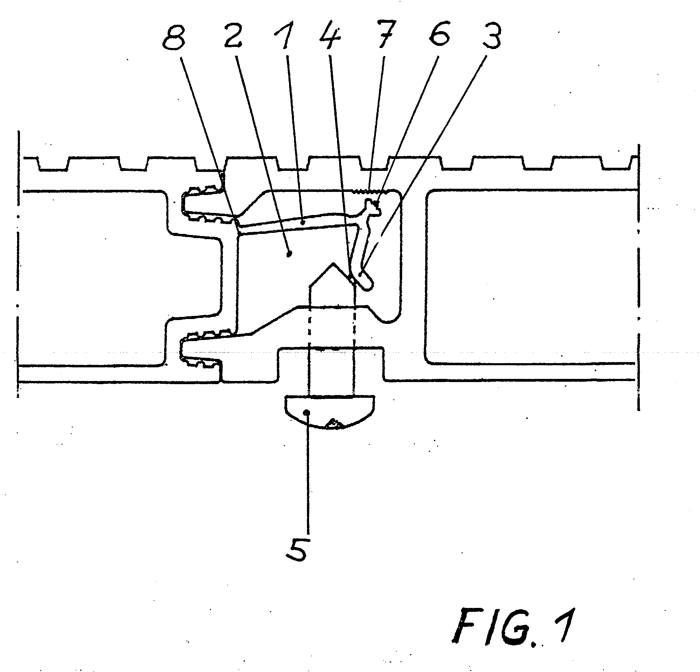

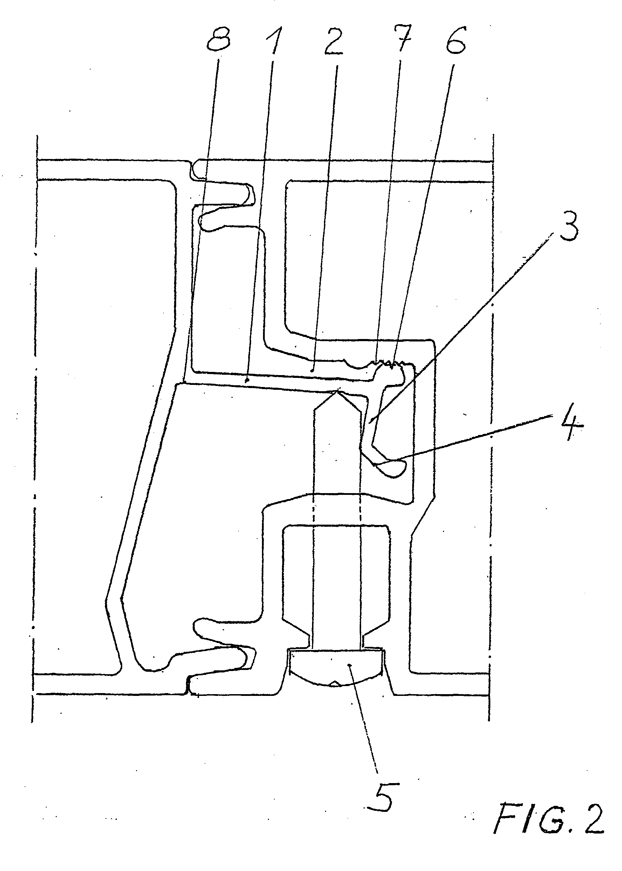

Die Längsseiten der flächenartigen Aluminiumstrangpreßprofile weisen korrespondierende Profilierungen auf, die nach dem Zusammenfügen einer Nut-Federverbindung entsprechen. Bekannt sind hierbei unterschiedliche Ausbildungen der Profilierungen, die aber immer miteinander korrespondieren müssen. Zwei mögliche Ausbildungen der Längsseiten sind in den beiden Figuren dargestellt. Erfindungsgemäß ist an einer Längsseite immer ein auskragender Steg 1 angeordnet, dessen Ende abgewinkelt ist. Dieser auskragende Steg 1 mit seiner Abwinklung 3 wird beim Zusammenfügen der Aluminiumstrangpreßprofile in eine auf einer Längsseite vorhandene Aufnahmenut 2 eingeführt und in dieser Aufnahmenut 2 festgelegt. Die Abwinklung 3 des auskragenden Stegs 1 ist mit einer Auflauffläche 4 versehen, die am freien Ende der Abwinklung 3 beginnt. Nach Fig. 1 verläuft diese Auflauffläche konkav, während sie nach Fig. 2 durch eine Schräge gebildet ist. In beiden Fällen verläuft die Abwinklung 3 unter einem Winkel kleiner als 90° zum auskragenden Steg 1 und ist unter einem beliebigen Winkel über den auskragenden Steg 1 hinaus verlängert. Das der Auflauffläche 4 gegenüberliegende Ende der Abwinklung 3 ist mit einer Profilierung 6 versehen, der eine äquivalente Gegenprofilierung 7 in der Aufnahmenut 2 zugeordnet ist. Zur Verbesserung der Stabilität bzw. der Verbundwirkung ist der die Profilierung 6 tragende Teil der Abwinklung verstärkt. Der auskragende Steg 1 besitzt nahe seiner Anschlußstelle eine Sollbiegelinie 8. Diese Sollbiegelinie 8 erleichtert das Biegen bzw. Abkanten des auskragenden Stegs 1 bis annähernd 90°.

Zum Festlegen des auskragenden Stegs 1 in der Aufnahmenut 2 des benachbarten Aluminiumstrangpreßprofils werden von einer äußeren Begrenzung aus in vorgegebenen Abständen Schrauben 5 eingeführt, die auf die Auflauffläche 4 der Abwinklung 3 des auskragenden Stegs 1 auftreffen, wodurch beim weiteren Eindrehen der Schrauben 5 infolge der vorgegebenen Formgestaltung der Auflauffläche 4 das mit dem auskragenden Steg 1 versehene Aluminiumstrangpreßprofil zum benachbarten Profil herangezogen und die Abwinklung 3 des auskragenden Stegs 1 auf dem Boden der Aufnahmenut 2 auftrifft, wobei die Profilierungen 6 und 7 ineinander verrasten. Wichtig hierbei ist, daß der horizontale Verschiebeweg des heranzuziehenden Profils und der vertikale Weg des auskragenden Stegs 1 so bemessen sind, daß deren Endstellungen zum identischen Zeitpunkt erreicht werden, so daß ein dichtes Anliegen der Profile und eine Verrastung in der Aufnahmenut 2 zum identischen Zeitpunkt eintreten.

In den Zeichnungen ist die zur Aufnahme der Schrauben 5 vorhandene Lochreihe nicht dargestellt. Die Schrauben 5 liegen nach Erreichung der Endstellung innerhalb der äußeren Begrenzung des Aluminiumstrangpreßprofils. Der am Rand einer hergestellten Fläche aus zusammengefügten Aluminiumstrangpreßprofilen vorhandene auskragende Steg 1, der in diesem Fall als herausstehendes Teil nur störend wirkt, wird entweder abgebrochen oder nach der in Fig. 2 dargestellten Ausbildung der Längsseite um annähernd 90° abgebogen, so daß er innerhalb der längsseitigen Begrenzung des Aluminiumstrangpreßprofils liegt.

### Aufstellung der Bezugszeichen:

- 1: auskragender Steg
- 2: Aufnahmenut
- 3: Abwinklung von 1
- 4: Auflauffläche
- 5: Schrauben
- 6: Profilierung an 3
- 7: Gegenprofilierung
- 8: Sollbiegelinie

## Patentansprüche

1. Flächenartige Aluminiumstrangpreßprofile, verbindbar zu einer Einheit, insbesondere zu einer begehbaren Fläche, wobei die Aluminiumstrangpreßprofile an ihren Längsseiten mit korrespondierenden Profilierungen versehen sind, mit einem an einer Längsseite befindlichen auskragenden Steg (1), dessen Ende abgewinkelt ist, und einer auf der anderen Längsseite befindlichen Aufnahmenut (2) für die Einführung des auskragenden Stegs (1) mit seiner Abwinklung (3), wobei der auskragende Steg (1) durch von einer äußeren Begrenzung aus einzuführende Befestigungselemente über seine Abwinklung (3) in der Aufnahmenut (2) des parallel verlaufenden Profils festlegbar ist, wobei die Abwinklung (3) des auskragenden Stegs (1) mit einer Auflauffläche (4) versehen ist, auf die die einführbaren Befestigungsmittel auftreffen, dadurch gekennzeichent, daß sich die Auflauffläche (4) am freien Ende des auskragenden Stegs (1) befindet und dadurch das den auskragenden Steg (1) aufweisende Aluminiumstrangpreßprofil zum benachrbarten Profil heranziehbar ist.

2. Aluminiumstrangpreßprofile nach Anspruch 1, dadurch gekennzeichnet, daß die Auflauffläche (4) durch eine konkav verlaufende Wölbung gebildet ist.

3. Aluminiumstrangpreßprofile nach Anspruch 1 oder 2, dadurch gekennzeichnet, daß die Auflauffläche (4) durch eine Schräge gebildet ist.

4. Aluminiumstrangpreßprofile nach einem der Ansprüche 1 bis 3, dadurch gekennzeichnet, daß die Abwinklung (3) unter einem Winkel kleiner als 90° zum auskragenden Steg (1) verläuft.

5. Aluminiumstrangpreßprofile nach einem der Ansprüche 1 bis 4, dadurch gekennzeichnet, daß die Abwinklung (3) beidseitig des auskragenden Stegs (1) verläuft.

6. Aluminiumstrangpreßprofile nach Anspruch 5, dadurch gekennzeichnet, daß das der Auflauffläche (4) gegenüberliegende Ende der Abwinklung (3) mit einer Profilierung (6) versehen ist, der eine äquivalente Gegenprofilierung (7) in der Aufnahmenut (2) zugeordnet ist.

7. Aluminiumstrangpreßprofile nach Anspruch 5 oder 6, dadurch gekennzeichnet, daß das der Auflauffläche (4) gegenüberliegende Ende der Abwinklung (3) mit einer Verstärkung versehen ist.

8. Aluminiumstrangpreßprofile nach einem der Ansprüche 1 bis 7, dadurch gekennzeichnet, daß der auskragende Steg (1) nahe seiner Anschlußstelle eine Sollbiegelinie (8) aufweist.

9. Aluminiumstrangpreßprofile nach einem der Ansprüche 1 bis 8, dadurch gekennzeichnet, daß der auskragende Steg (1) annähernd um 90° abbiegbar angeordnet ist.

10. Aluminiumstrangpreßprofile nach Anspruch 9, dadurch gekennzeichnet, daß der annähernd um 90° abgebogene Steg (1) innerhalb der längsseitigen Begrenzung des Aluminiumstrangpreßprofils liegt.

11. Aluminiumstrangpreßprofile nach einem der Ansprüche 1 bis 10, dadurch gekennzeichnet, daß zur Einführung der Befestigungselemente eine Lochreihe angeordnet ist.

12. Aluminiumstrangpreßprofile nach einem der Ansprüche 1 bis 11, dadurch gekennzeichnet, daß die äußere Begrenzung der Befestigungselemente im Funktionszustand innerhalb der äußeren Begrenzung des Aluminiumstrangpreßprofils liegt.

13. Aluminiumstrangpreßprofile nach einem der Ansprüche 1 bis 12, dadurch gekennzeichnet, daß als Befestigungselemente Schrauben (5) dienen.

## Claims

1. Areal extruded aluminium profile members connectible to form a unit, especially to form a tread surface, wherein the extruded aluminium profile members are provided at their longitudinal sides with corresponding profilings, with a projecting web (1) which is disposed at one longitudinal side and the end of which is angled, and a receiving groove (2), which is disposed on the other longitudinal side, for the insertion of the projecting web (1) by its angled portion (3), wherein the projecting web (1) is fixable in the receiving groove (2) of the parallelly extending profile member by way of its angled portion (3) by fastening elements to be inserted from an outer boundary, wherein the angled portion (3) of the projecting web (1) is provided with a run-up surface (4) on which the insertable fastening means impinge, characterised thereby that the run-up surface (4) is disposed at the free end of the projecting web (1) and thereby the extruded aluminium profile member having the projecting web can be drawn up to the adjacent profile member.

2. Extruded aluminium profile member according to claim 1, characterised thereby that the run-up surface (4) is formed by a concavely extending bow.

3. Extruded aluminium profile member according to claim 1 or 2, characterised thereby that the run-up surface (4) is formed by a slope.

4. Extruded aluminium profile member according to one of claims 1 to 3, characterised thereby that the angled portion (3) extends at an angle of less than 90° to the projecting web (1).

5. Extruded alumi-nium profile member according to one of claims 1 to 4, characterised thereby that the angled portion (3) extends at both sides of the projecting web (1).

6. Extruded aluminium profile member according to claim 5, characterised thereby that the end of the angled portion (3) opposite to the run-up surface (4) is provided with a profiling (6) which is associated with an equivalent counter-profiling (7) in the receiving groove (2).

7. Extruded aluminium profile member according to claim 5 or 6, characterised thereby that the end of the angled portion (3) opposite to the run-up surface (4) is provided with a reinforcing.

8. Extruded aluminium profile member according to one of claims 1 to 7, characterised thereby that the projecting web (1) has an intended line (8) of bending near its connection location.

9. Extruded aluminium profile member according to one of claims 1 to 8, characterised thereby that the projecting web (1) is arranged to be bendable through approximately 90°.

10. Extruded aluminium profile member according to claim 9, characterised thereby that the web (1) bent through approximately 90° lies within the boundary of the extruded aluminium profile member at the longitudinal side.

11. Extruded aluminium profile member according to one of claims 1 to 10, characterised thereby that a row of holes is arranged for the insertion of the fastening elements.

12. Extruded aluminium profile member according to one of claims 1 to 11, characterised thereby that the outer boundary of the fastening elements lies within the outer boundary of the extruded aluminium profile member in the functional state.

13. Extruded aluminium profile member according to one of claims 1 to 12, characterised thereby that screws (5) serve as the fastening elements.

## Revendications

1. Profilés plats en aluminium filé qui peuvent être réunis en un ensemble, en particulier pour créer une surface de circulation, dans lesquels
- le long des côtés longitudinaux se trouvent des profilages correspondants, à savoir une barre (1) en saillie par rapport à un côté longitudinal et dont l'extrémité est coudée, ainsi que, le long de l'autre côté longitudinal, une gorge de réception (2) pour l'engagement de la barre (1) et de son développement (3),
- la barre en saillie (1) peut, par l'intermédiaire d'éléments de fixation introduits de l'extérieur, être fixée par son développement (3) dans la gorge (2) du profilé parallèle voisin, le développement (3) de la barre (1) présentant une portée d'accostage (4) que viennent rencontrer les éléments de fixation introductibles,
caractérisés en ce que
la portée d'accostage (4) se trouve à l'extrémité libre de la barre en saillie (1) et permet ainsi que le profilé d'aluminium portant la barre en saillie (1) soit tiré en direction du profilé voisin.

2. Profilés en aluminium filé selon la revendication 1,
caractérisés en ce que
la portée d'accostage (4) est constituée par une partie bombée concave.

3. Profilés en aluminium filé selon la revendication 1 ou 2,
caractérisés en ce que
la portée d'accostage (4) est constituée par une partie inclinée.

4. Profilés en aluminium filé selon une des revendications 1 à 3,
caractérisés en ce que
le développement (3) fait un angle inférieur à 90° par rapport à la barre en saillie (1).

5. Profilés en aluminium filé selon une des revendications 1 à 4,
caractérisés en ce que
le développement (3) s'étend des deux côtés de la barre en saillie (1) .

6. Profilés en aluminium filé selon la revendication 5,
caractérisés en ce que
l'extrémité du développement (3) située à l'opposé de la porte d'accostage (4) porte un profilage auquel correspond un contre profilage (7) équivalent de la gorge de réception (2).

7. Profilés en aluminium filé selon la revendication 5 ou 6,
caractérisés en ce que
l'extrémité du développement (3) située à l'opposé de la portée d'accostage (4) est munie d'un renforcement.

8. Profilés en aluminium filé selon une des revendications 1 à 7,
caractérisés en ce que
la barre en saillie (1) présente une ligne de pliage imposé près de sa zone de raccordement.

9. Profilés en aluminium filé selon une des revendications 1 à 8,
caractérisés en ce que
la barre en saillie (1) est disposée de manière à pouvoir être pliée de 90° environ.

10. Profilés en aluminium filé selon la revendication 9,
caractérisés en ce que
la barre (1) une fois rabattue d'environ 90°, se trouve à l'intérieur du contour ,au niveau des côtés longitudinaux, du profilé en aluminium filé.

11. Profilés en aluminium filé selon une des revendications 1 à 10,
caractérisés en ce qu'
il est prévu une rangée de trous pour introduire les éléments de fixation.

12. Profilés en aluminium filé selon une des revendications 1 à 11,
caractérisés en ce que
la limite externe des éléments de fixation en position active, se trouve à l'intérieur du contour externe du profilé en aluminium filé.

13. Profilés en aluminium filé selon une des revendications 1 à 12,
caractérisés en ce que
des vis (5) sont utilisées comme éléments de fixation.
